# EUROPEAN PATENT APPLICATION

(11) **EP 4 589 159 A1**
(43) Date of publication of application: **23.07.2025**
(21) Application number: 22958832.2
(22) Date of filing: 16.09.2022
(51) Int. Cl.: F16B 43/00

(54) **SQUARE WASHER AND FASTENING STRUCTURE**

(71) Applicant: Nippon Plarad Co., Kobe-shi, Hyogo, 651-2404 (JP)
(72) Inventor: SAEKI, Hiroshi, Kobe-shi , Hyogo 651-2404 (JP)
(74) Representative: Zimmermann, Tankred Klaus
(86) International application number: PCT/JP2022/034669
(87) International publication number: WO 2024/057512

(57) **Abstract**

Provided are a asher that is simple structure and controls the simultaneous turning of the washer.

Disclosed is a polygonal washer 1 is used between a mounting surface Sa of an object to be attached S and a nut 2 or a bolt head. The polygonal washer 1 comprises a washer body 1A. The washer body 1A has a polygonal shape, seen from an orthogonal direction against the nut 2. Central recess 1Aa is formed on the mounting surface Sa side. As for the configuration of the central recess 1Aa, it is equal to the configuration of the nut 2 or, it is equal to the head of a bolt, or it is formed more greatly than the nut 2 or it is formed more greatly than the configuration of the head of the bolt. As a result, when it is tightened with the nut 2 or the bolt, the center portion of the main body 1A of the washer has the elasticity displaced to the mounting surface side Sa is possessed.

## Description

### Technical Field

The invention relates to a polygonal washer and a fastening structure.

### Background Art

Generally, a bolt or a nut is used when an object to be attached is attached to an attachment object. In this case, although fastening is performed by rotating the bolt or the nut, the size is not limited, and a lower surface of the bolt or the nut is rubbed against an mounting surface (seat surface) of the object to be attached. As the fastening is tightly fastened, the force of rubbing the mounting surface increases; therefore, when a paint is applied to the mounting surface, the paint may be peeled off, and the mounting surface under the paint may be rubbed.

**In** this case, the mounting surface is rough, and if it gets worse, the surface becomes uneven. Thus, a commodity value of a product attached using the bolt or the nut is lowered.

Although the bolt or the nut may be frequently repeatedly loosened and tightened for maintenance or the like, even in such a case, the mounting surface may be rough, and a component at a portion constituting the mounting surface may need to be replaced, or the mounting surface may need to be repaired cleanly.

As one means for solving this problem, it is conceivable to avoid direct contact by performing fastening by sandwiching a flat washer (flat round washer) between a head of the bolt or the nut and the mounting surface.

However, in practice, when the bolt or the nut is tightly fastened, the flat washer also co-rotates with the bolt or the nut, and there is a risk that the flat washer damages the mounting surface even if there is a difference in degree.

Therefore, in order to control the simultaneous turning of the washer, it is proposed that, the washer comprising: a washer body, and a central recess formed on the mounting surface side of the washer body, the configuration of the central recess (shape of the peripheral line) is equal to the configuration of the nut or the bolt head, or it is enlarged more than the configuration of the nut or the bolt head. (For instance, see Patent Document 1)

### Citation List

### Patent Literature

Patent Document 1: JP, 2021-179250, A

### Summary of Invention

### Technical Problem

However, not only improvement of the taking turn suppression effect of the simultaneous turning of the washer, but also there is a requirement having simple structure.

Therefore, the invention is object to provide a polygonal washer that can control the simultaneous turning of the washer by simple structure, and the fastening structure.

### Solution to Problem

The invention comprising:
a polygonal washer in which it is fitted between an mounting surface of an object to be attached and a nut or a bolt head,
the washer including a washer body;
the washer body being,
polygonal form seen from an orthogonal direction, which is orthogonal to the nut or the bolt head side,
a central recess is formed on the mounting surface side,
the configuration of the central recess is equal to the configuration of the nut or the bolt head, or
the configuration of the central recess is formed more greatly than the configuration of the nut or the bolt head,
when the washer body is tightened with the nut or the bolt,
the center portion of the washer body has the elasticity displaced to the mounting surface side is possessed.

In this case, it is not necessary to be formed to the central recess over all surfaces.

Within the range where the elasticity is not ruined, the one that a plane portion is formed to the fringe of the center hole and the peripheral line of the washer body is included.

By composing like this, in a structure simply, when the nut or the bolt is tightened and loosened, they do not simultaneous turning.

Therefore, it is avoided to damage the mounting surface of the object to be attached by the simultaneous turning.

In this case, in the central recess, the recess inner periphery surface is formed like the curve surface that extends from the vicinity of the center hole of the washer body toward the peripheral line,
the washer body, in the state of installed,
before the washer body is tightened with the nut or the bolt,
the point of each corner of the washer body comes in contact with the mounting surface,
when the washer body is tightened,
the vertex of the corner is embedded on the mounting surface, and
it is preferable that the center portion of the washer body can be elastically deformed to the mounting surface side.

In this case, as for the curve surface shape, globular surface and conical surface and the like would be included.

In these cases, it is preferable that,
on the side of the nut of the washer body or on the side of the head side of the bolt, the annular protrusion is formed,
the configuration of the annular protrusion is equal to the configuration of the nut or the bolt head, or
the configuration of the annular protrusion is smaller than the configuration of the nut or the bolt head.

Moreover, it is preferable that the peripheral edge between each corner of the washer body is formed as clearance,
in which in the state of being installed,
before it is tightened with the nut or the bolt, in which the space is formed between the mounting surfaces.

As this configuration, when the center portion of the washer body is displaced to the mounting surface side, the center portion of the washer body can be easily deformed.

Moreover, it is preferable that,
on the side of the nut of the washer body or on the side of the bolt head,
at least on a right and left side, the side protrusion is provided,
the side surface on the center side of the side protrusion is a surface that regulates the rotation of the nut or the bolt.

Moreover, it is preferable that,
on the nut of the washer body or on the bolt head side,
the side protrusion is provided to the right and left side,
between the side protrusions, a straight groove is formed, and
the width of the groove is the same as the width of the nut or the bolt head (so-called width of these elements) or it is a little large.

Moreover, it is preferable that the side protrusion is formed as that the upper surface thereof is formed to lower gradually toward counterclockwise in its height.

Moreover, the invention is a fastening structure, wherein
the polygonal washer is disposed between the mounting surface of the object to be attached and the nut or the bolt head,
the polygonal washer is the polygonal washer as defined in one of Claims 1 to Claim 3.

### Advantageous Effects of Invention

In this invention, it is a simple structure and that without simultaneous turning in case of the tightening and the loosening of the nut or the bolt, and
it can be avoided to damage the mounting surface of the object to be attached by the simultaneous turning.

### Brief Description of Drawings

[Fig. 1]

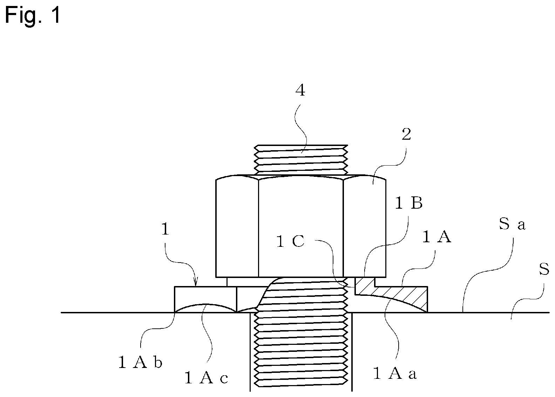

   Fig. 1 is a cross-sectional view where the fastening structure with the polygonal washer according to embodiment 1 of the present invention is indicated.
[Fig. 2]

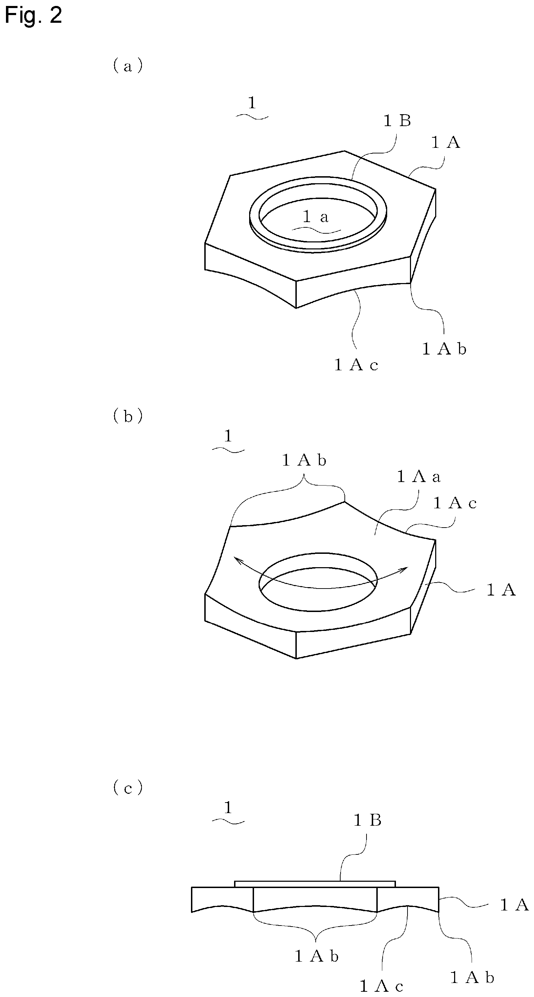

   Fig. 2 shows the polygonal washer wherein
   Fig. 2 (a) is a perspective view seen from the upper side,
   Fig. 2 (b) is a perspective view seen from the lower side and
   Fig. 2 (c) is a side view.
[Fig. 3]

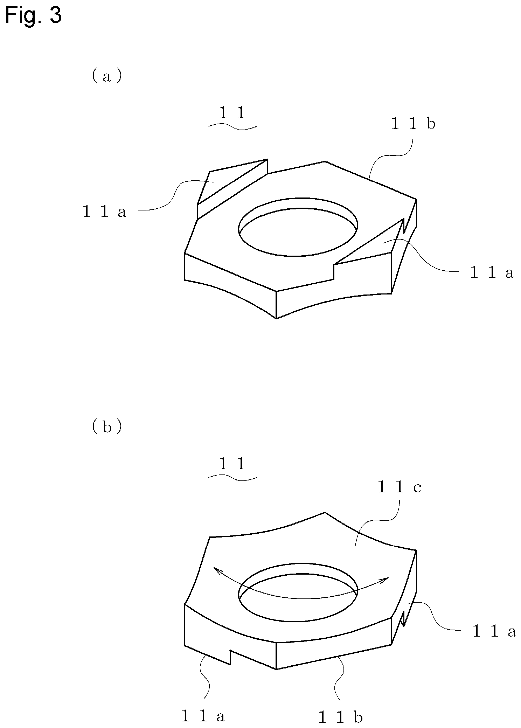

   Fig. 3 shows the polygonal washer according to the embodiment 2 of the present invention is indicated,
   Fig. 3 (a) is a perspective view seen from the upper side, and
   Fig. 3 (b) is a perspective view seen from the lower side.
[Fig. 4]

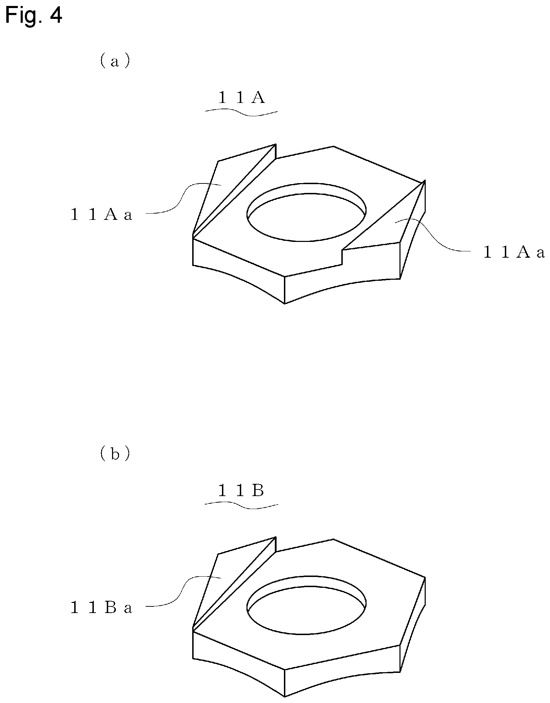

   Fig. 4 (a) and Fig. 4 (b) are a perspective view that indicates another example of this invention respectively.

### Description of Embodiments

Although the embodiments of the present invention are explained according to the drawing as follows,
the invention is not limited to the embodiments listed below.

Fig. 1 is cross-sectional view where the fastening structure with the polygonal washer according to the embodiment 1 of the present invention is indicated.

As shown in Fig. 1, for instance, as for the polygonal washer 1 according to the present invention,
it places and is used between an mounting surface Sa of the object to be attached S, which is provided to the attachment object (not shown in the figure), and a nuts 2.

The polygonal washer 1 has a hexagonal shape, seen from an orthogonal direction against the nut 2.

On the side where an mounting surface Sa of a washer body 1A comes in contact, a central recess 1Aa is formed.

By tightening the nut 2, it is deformable and has elasticity as the center section of the washer body 1A approaches the mounting surface Sa side.

On the center of the washer body 1A, a center hole 1a, where a screw rod 4 to which the nut 2 is screwed together penetrates, is formed.

In addition, as for the polygonal washer, in view from the direction that it is orthogonal in the surface that becomes the nut 2 side, it need not be a hexagonal shape.

Moreover, the polygonal washer may be other polygons that are triangular and are quadrangles, etc.

On the side that comes in contact with the nut 2 of the polygonal washer 1, as shown in Fig. 2(a), an annular protrusion 1B, which is projected from the washer body 1A to the nut 2 side, is formed together with.

The inner periphery wall of this annular protrusion 1B is consecutive on the inner periphery wall of a center hole 1a.

As for the configuration of the annular protrusion 1B, in case that the nut 2 for the fastening is a cross section hexagon, it is the same degree of the configuration of the size as interval L (width across flats) on two parallel surfaces.

In addition, the minimum diameter that the annular protrusion 1B needs is the same sizes as interval L of two parallel surfaces of the nut 2.

As for a central recess 1Aa, as shown in Fig. 2(a) (b), it is formed like the curve surface, in which the recess inner periphery surface extends from the fringe of a center hole 1a of the polygonal washer 1 toward a peripheral line 1Ac on over all faces.

As for the peripheral line 1Ac, between each corner 1Ab of the washer body 1A, it is a clearance portion to form the space between the mounting surface Sa.

In a word, in the state of mounting, the main body of washer 1A, before it is tightened with the nut 2, the point of each corner 1Ab of the washer body 1A comes in contact with the mounting surface Sa.

However, a peripheral line 1Ac between point of respective each corner 1Ab is away from the mounting surface Sa.

In addition, when it is tightened, the center section of the washer body 1A is depressed as approaching to the mounting surface Sa side.

As a result, the vertex of corner 1Ab is mounted into the mounting surface.

The center portion of the washer body 1A, as a whole, is deformed elastically, as approaching to the mounting surface Sa side.

As a result, because there is a clearance, the elastic deformation is never disturbed.

As for the configuration of the central recess 1Aa (shape of the peripheral line), it is equal to the configuration of the nut 2 (or, head of the bolt), or it is formed more greatly than the configuration of the nut 2.

However, the reason for providing such central recess 1Aa, on the surface where the polygonal washer 1 comes in contact with the mounting surface Sa of the object to be attached S,
if assume the vicinity of the center portion to be a concavity, it is because the center portion of the polygonal washer 1 can avoid the direct contact of the mounting surface Sa of the object to be attached S.

As shown in Fig. 1, where fastening it with the nut 2, the lower surface of the nut 2 (surface on the object to be attached S side) comes in contact only with the upper surface of the annular protrusion 1B of the polygonal washer 1.

As for the lower surface of the polygonal washer 1, only the tip (point) of six corners 1Ab have come in contact with the mounting surface Sa.

In a word, the spider (i.e. polygonal washer) is just like standing on the floor face (i.e. on the mounting surface).

When the polygonal washer 1 is placed and the nut 2 is tightened to a screw rod 4,
the lower surface of the nut 2 is fastened while rubbing the upper surface of the polygonal washer 1 (upper surface of a annular protrusion 1B)(together with slipping).

The polygonal washer 1 would not be simultaneous turning with the nut 2 at all.

As a result, against the mounting surface Sa of the object to be attached S, it is immovable.

By tightening, the tip of six corners 1Ab of the polygonal washer are buried into the mounting surface Sa.

Thereby, the simultaneous turning effect of the polygonal washer 1 is improved.

The center portion of the washer body 1A is elasticity deformed as to be displaced to the mounting surface side Sa.

Therefore, the diameter of the polygonal washer 1 may be equal to the diameter of the bearing surface of the nut (or, same to nut shape configuration).

Because the polygonal washer 1 is immovable for this mounting surface Sa, as a result, the polygonal washer 1 never almost damages the mounting surface Sa.

In this manner, the reason that the polygonal washer 1 does not turn simultaneously with the nut 2.

That is to say, in the upper surface of the polygonal washer 1 (i.e. the upper surface of the annular protrusion 1B), the nut 2 slides and
the lower surface of the polygonal washer 1 does not slip at all for the mounting surface Sa.

This is depended on the following reason.

As described in Japanese Patent Provisional Publication No. 2021- 179250,
the frictional force between the nut and the polygonal washer and
the frictional force between the polygonal washer and the mounting surface
are irrelevant to the size of the area of those contact portions and
it has the relation only of the pressing power by nut 2 and it becomes the same.

Moreover, with respect to coefficient of friction µ1 and µ2, the nut 2 that comes in contact with the polygonal washer 1 and the object to be attached S are made of iron and made of same material.

Therefore, as for the coefficient of friction µ1 and µ2, it is considered that µ1 and µ2 are even if there is a little difference.

As a result, the frictional force becomes equal after all.

On the other hand, in case that tighten the nut 2 (i.e. it is the same even when it loosens it), depends on the difference about the magnitude, i.e.,
whether the polygonal washer 1 cause "simultaneous turning" or not is depends on the difference about the magnitude between
   the power (torque = turning force T1) that urges to rotate the polygonal washer 2 and
the rotational resistance power (torque = rotational resistance power T2) which affects on that the polygonal washer 1 would not rotate against the mounting surface Sa.

Therefore, by providing the central recess 1Aa, the rotational resistance power T2, which affects on the polygonal washer 1 not to rotate against the mounting surface Sa, is increased,
more than the power T1, by which it urges to rotate the polygonal washer 1 by the frictional force between the nut 2 and the polygonal washer 1.

Namely, in providing the central recess 1Aa,
the length R2 (radius), i.e. the length R2 (radius) from the rotation center to the contact portion between the polygonal washer and the mounting surface,
is increased in size more than the length R1 from the rotation center to the contact portion between the nut 2 and the polygonal washer 1.

As a result, even if the frictional force is the same, the rotational resistance power T2 of the polygonal washer 1 is increased in size more than the power T1 by the nut 2, which is urged to rotate polygonal washer 1.

Consequently, the polygonal washer 1 is not rotated and the nut 2 only rotates.

As shown in above, the Embodiments of the invention are explained in reference to the drawings.

However, various additions and alternations are possible within the range in which it doesn't deviate from the spirit of the invention.

(i) In the above embodiments, the present invention applies to the polygonal washer provided between the nut and the mounting surface of the object to be attached.
   However, the invention is not limited to these embodiments, the invention could be applied to the polygonal washer provided between the head of the bolt and the object to be attached can be similarly applied.
(ii) As shown in Fig. 3(a) (b), on the opposite side, i.e. on the other side where the mounting surface Sa comes in contact in which a central recess is provided,
   two shoulder portions 11a (i.e. side protrusions) are provided so that it is possible to make it to the polygonal washer 11, in which the straight line groove 11b having the constant width (straight groove) is formed in the direction of the diameter.

This straight line groove 11b has the same as interval L of two parallel planes of the head of the hexagon bolt or has large width a little.

This straight line groove 11b has the magnitude of engagement in which the head of the hexagon bolt used for the fastening (or, nut) is engaged.

In this case, as for the shoulder 11a (side protrusion), the shoulder 11a (side protrusion) need not be disposed to the right side and left side of the polygonal washer.

In addition, the shoulder 11a may be disposed even only providing to one side on the right side and the left side.

Moreover, it is not necessary to provide the shoulder 11a to the corner, and it may be provided to a plane portion.
(iii)
As shown in Fig. 3(a) (b), in case of that the shoulder 11a (side protrusion) is disposed,
as shown in Fig. 4(a) (b) (in Fig. 4(a), two shoulders are shown and in Fig. 4(b), one shoulder is shown),
it is preferable that the upper surfaces of the shoulders 11Aa, 11Aa and 11Ba of the polygonal washers 11A and 11B are to be the shape that is the slope where height lowers gradually toward counterclockwise (i.e. that is to say, anti-clockwise).

As such configuration, when the nut is tightened in the beginning, some heads of the bolts are placed on the shoulder portions 11Aa, 11Aa and 11Ba (side protrusions),
in this condition, if the nut is turned a little to the side where the nut is tightened,
against the bolt not seen from the side where the nut is tightened,
the head is automatically turned and slipped together with the bolt along the slope.

As a result it can be fitted in a smoothly regular position and it can be crowded.

Moreover, the side surface on the center side of the shoulder would not need to be plane, it only has to be a surface that regulates the rotation of the nut or the bolt.

In this case, the slope where height lowers gradually anti-clockwise can be formed to the shoulder.

### [Explanation of Letters or Numerals]

1 11, 11A, 11B
Polygonal washer
1A
Main body of washer
1Aa
Central recess
1Ab
Corner
1Ac
Peripheral line
1B
Annular protrusion
2
Nut
4
Screw rod
11
Polygonal washer
11a
Shoulder portion
S
Object to be attached
Sa
Mounting surface

## Claims

1. A polygonal washer in which it is fitted between a mounting surface of an object to be attached and a nut or a bolt head, comprising:
a washer body has polygonal form seen from an orthogonal direction, which is orthogonal to the nut or the bolt head side, and a central recess is formed on the mounting surface side, and
the configuration of the central recess is equal to the configuration of the nut or the bolt head, or
the configuration of the central recess is formed more greatly than the configuration of the nut or the bolt head,
when the washer body is tightened with the nut or the bolt,
the center portion of the washer body has the elasticity displaced to the mounting surface side is possessed.

2. The polygonal washer according to Claim 1 wherein
in the central recess, the recess inner periphery surface is formed like the curve surface that extends from the vicinity of the center hole of the washer body toward the peripheral line, and
the washer body, in the state of installed, before the washer body is tightened with the nut or the bolt, the mounting surface comes in contact with the point of each corner of the washer body, and
when the washer body is tightened, the vertex of the corner is embedded on the mounting surface, and
the center portion of the washer body is elastically deformed to the mounting surface side.

3. The polygonal washer according to Claim 2 wherein
a peripheral edge between each corner of the washer body is formed as clearance,
in which in the state of being installed, before it is tightened with the nut or the bolt, in which the space is formed between the mounting surfaces.

4. The polygonal washer according to Claim 1 wherein
on the side of the nut of the washer body or on the side of the head side of the bolt, the annular protrusion is formed, and
the configuration of the annular protrusion is equal to the configuration of the nut or the bolt head, or
the configuration of the annular protrusion is small from configuration of the nut or bolt head.

5. The polygonal washer according to Claim 1 wherein
on the side of the nut of the washer body or on the side of the bolt head, at least on the right and left side, the side protrusion is provided, and
the side surface on a center side of the side protrusion is a surface that regulates the rotation of the nut or the bolt.

6. The polygonal washer according to Claim 1 wherein
on the nut of the washer body or on the bolt head side, the side protrusion is provided to the right and left side, and
between the side protrusions, a straight groove is formed, and
the width of the groove is the same as the width of the nut or the bolt head or it is a little large.

7. The polygonal washer according to Claim 5 or 6 wherein
the side protrusion is formed as that the upper surface thereof is formed to lower gradually toward counterclockwise in its height.

8. A fastening structure, in which a polygonal washer is disposed between a mounting surface of an object to be attached and a nut or a bolt head, the polygonal washer being the polygonal washer according to any one of claims 1 to 3.
